# EUROPÄISCHE PATENTSCHRIFT

(11) **EP 0 862 277 B1**
(45) Veröffentlichungstag und Bekanntmachung des Hinweises auf die Patenterteilung: **06.05.2004**
(21) Anmeldenummer: 98102398.9
(22) Anmeldetag: 12.02.1998
(51) Int. Cl.: H04B 1/38

(54) **Tragbares Telekommunikationsendgerät**
Portable communications terminal
Terminal portable de communication

(30) Priorität: 28.02.1997 DE 19708120
(43) Veröffentlichungstag der Anmeldung: 02.09.1998
(73) Patentinhaber: ROBERT BOSCH GMBH, 70442 Stuttgart (DE)
(72) Erfinder: Eckhardt, Claus-Chr., 30171 Hannover (DE)

(56) Entgegenhaltungen:
- US-A- 5 384 844
- US-A- 5 475 752
- US-A- 5 537 472

## Beschreibung

Die Erfindung betrifft ein tragbares Kommunikationsendgerät mit einem an der Gehäuserückwand vorgesehenen Trageclip.

Tragbare Kommunikationsendgeräte, wie beispielsweise Mobiltelefone, Funksprechgeräte, Empfänger für Personenrufanlagen sind im allgemeinen mit einem Trageclip zur Befestigung an der Bekleidung, insbesondere an einem Gürtel oder am Rand einer Tasche, versehen. Dieser Trageclip, der bisher lediglich zur Befestigung des Gerätes an der Bekleidung diente, kann auch abnehmbar ausgebildet sein.

Im Dokument US5475752 ist ein tragbares Telefon mit einem Trageclip an der Gehäuserrückwand offenbart.

Der Erfindung liegt die Aufgabe zugrunde, ein tragbares Kommunikationsendgerät der eingangs genannten Art vorzuschlagen, bei dem die Antenne integriert ist und außerdem ein weiterer Lautsprecher zum Freisprechen vorgesehen ist.

Diese Aufgabe wird erfindungsgemäß dadurch gelöst, daß in dem Trageclip ein Lautsprecher und eine Antenne integriert sind.

Das hat den Vorteil, daß der zusätzliche Lautsprecher zum Freisprechen sowie die eingebaute Antenne keinen zusätzlichen Platz im Gehäuse des tragbaren Kommunikationsendgerätes beanspruchen.

Eine vorteilhafte Ausgestaltung der Erfindung besteht darin, daß der Trageclip über ein Gelenk mit dem Gehäuse des Kommunikationsendgerätes stufenweise schwenkbar bzw. klappbar verbunden ist. Dadurch ist es möglich, daß der Trageclip um etwa 180° gegenüber der eingeklappten, am Gehäuse anliegenden Stellung hochklappbar ist. Das hat den Vorteil, daß damit eine höhere Sende- und Empfangsleistung erreichbar ist. Außerdem besteht die Möglichkeit, daß der Trageclip um etwas mehr als 90° gegenüber der eingeklappten, am Gehäuse anliegenden Stellung ausklappbar ist, wodurch eine pultartige Positionierung des tragbaren Kommunikationsendgerätes auf dem Tisch erreicht wird.

Gemäß einer Weiterbildung der Erfindung weist das Gelenk des Trageclips elektrische Kontaktvorrichtungen zur Verbindung von Lautsprecher und Antenne mit den entsprechenden elektrischen Schaltkreisen im Kommunikationsendgerät auf. Dadurch ist es möglich, daß der Trageclip vom Kömmunikationsendgerät abnehmbar ausgebildet ist.

Eine vorteilhafte Ausgestaltung des erfindungsgemäßen Kommunikationsendgerätes besteht darin, daß der Trageclip im Bereich der Mitte seiner Außenwand mehrere kleine Öffnungen für den Schallaustritt des Lausprechers aufweist.

Die Erfindung ist ferner auch in einem Trageclip zu sehen, der dadurch gekennzeichnet ist, daß in dem als Hohlkörper gestalteten, dem entsprechenden Gehäusebereich des Kommunikationsendgerätes angepaßten Trageclip ein Lautsprecher und eine Antenne eingebaut sind und daß diese Einbauteile mit einer elektrischen Kontaktvorrichtung im Bereich des Gelenkteiles für die Befestigung des Trageclips an dem tragbaren Kommunikationsendgerät verbunden sind.

Bei eventuellen Defekten des Trageclips kann das erfindungsgemäße Kommunikationsendgerät schnellstens mit einem neuen, im Zubehörhandel erhältlichen Trageclip ausgerüstet werden. Gegebenenfalls kann auch ein an sich mit einem anderen Trageclip versehenes Kommunikationsendgerät mit einem erfindungsgemäßen Trageclip nachgerüstet werden, wenn die mechanischen und elektrischen Anschlüsse vorliegen.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine Rückansicht des erfindungsgemäßen Gerätes,
- Fig. 2: eine Seitenansicht des erfindungsgemäßen Gerätes und
- Fig. 3: eine Seitenansicht des Trageclips.

Gleiche Teile sind in den Figuren mit gleichen Bezugszeichen versehen.

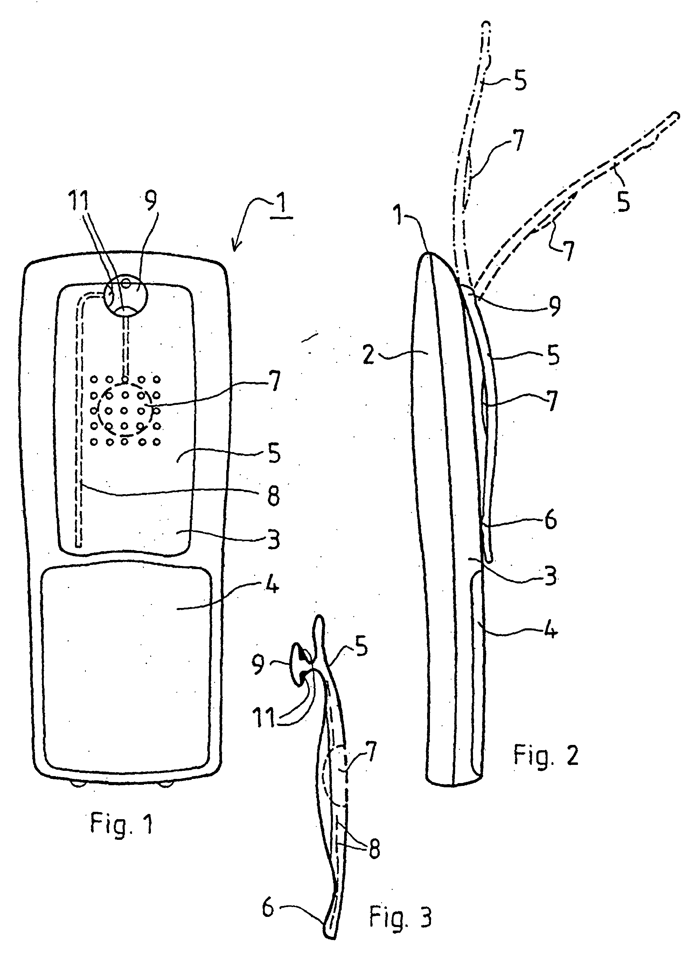

Das in den Figuren 1 und 2 als Ausführungsbeispiel dargestellte Mobiltelefon 1 weist ein aus zwei Halbschalen 2, 3 bestehendes Gehäuse auf, wobei auf der Frontseite der Halbschale 2 in an sich bekannter Weise Bedienelemente und Schalldurchtrittsöffnungen angeordnet sind. Diese sind jedoch in den Figuren nicht dargestellt, da sie zur Erläuterung der Erfindung nicht notwendig sind. Die rückwärtige Halbschale 3 weist eine Öffnung zum Einsetzen von Batterien auf, die mit Hilfe eines Deckels 4 verschließbar ist.

Zum Tragen des Mobiltelefons, beispielsweise an einem Gürtel oder an einer Außenseite einer Tasche, ist ein Trageclip 5 vorgesehen, der im oberen Bereich der Halbschale 3 bzw. der Rückwand des Mobiltelefons befestigt ist und mit einem Nocken 6 unter Spannung im mittleren Bereich auf der Rückwand des Gerätes aufliegt.

Der Trageclip 5 gemäß Fig. 3 ist erfindungsgemäß als Hohlkörper so gestaltet, daß er einen Lautsprecher 7 sowie eine Antenne 8 beinhalten kann, welche in den Figuren nur andeutungsweise dargestellt sind. Außerdem weist der Trageclip 5 ein Gelenk 9 auf zum stufenweisen Schwenken sowie zum problemlosen und schnellen Lösen des Trageclips 5 von der Gehäuseschale 3 des Mobiltelefons 1. Diese im Trageclip 5 integrierten Teile Lautsprecher 7 und Antenne 8 sind an elektrische Kontaktvorrichtungen 11 angeschlossen, welche im Bereich des Gelenks 9 angeordnet sind und mit entsprechenden Gegenkontakten in der Gelenkaufnahme der Halbschale 3 zum Anschluß an die entsprechenden elektrischen Schaltkreise im Mobiltelefon 1 korrespondieren.

Der Lautsprecher 7 dient zusätzlich zur im Mobiltelefon 1 angeordneten Hörkapsel als Freisprech-Einrichtung. Mit der Antenne 8 kann durch Hochklappen des Trageclips 5 in die strichpunktiert gezeichnete Stellung nach Fig. 2 eine wesentlich höhere Sende- und Empfangsleistung erreicht werden. Außerdem ist die Möglichkeit gegeben, den Trageclip 5 nur bis zu der in Fig. 2 gestrichelt gezeichneten Stellung auszuklappen und damit eine pultartige Positionierung des Mobiltelefons 1 auf einem Tisch zu erreichen.

## Patentansprüche

1. Tragbares Kommunikationsendgerät (1) mit einem an der Gehäuserückwand vorgesehenen Trageclip (5), **dadurch gekennzeichnet, daß** in dem Trageclip (5) ein Lautsprecher (7) und eine Antenne (8) integriert sind.

2. Tragbares Kommunikationsendgerät nach Anspruch 1, **dadurch gekennzeichnet, daß** der Trageclip (5) über ein Gelenk (9) mit dem Gehäuse des Kommunikationsendgerätes (1) stufenweise schwenkbar bzw. klappbar verbunden ist.

3. Tragbares Kommunikationsendgerät nach Anspruch 2, **dadurch gekennzeichnet, daß** der Trageclip (5) um etwa 180° gegenüber der eingeklappten, am Gehäuse anliegenden Stellung hochklappbar ist.

4. Tragbares Kommunikationsendgerät nach Anspruch 2, **dadurch gekennzeichnet, daß** der Trageclip (5) um etwas mehr als 90° gegenüber der eingeklappten, am Gehäuse anliegenden Stellung ausklappbar ist.

5. Tragbares Kommunikationsendgerät nach Anspruch 2, **dadurch gekennzeichnet, daß** das Gelenk (9) des Trageclips (5) elektrische Kontaktvorrichtungen (11) zur Verbindung von Lautsprecher (7) und Antenne (8) mit den entsprechenden elektrischen Schaltkreisen im Kommunikationsendgerät (1) aufweist.

6. Tragbares Kommunikationsendgerät nach Anspruch 5, **dadurch gekennzeichnet, daß** der Trageclip (5) abnehmbar ist.

7. Tragbares Kommunikationsendgerät nach Anspruch 1, **dadurch gekennzeichnet, daß** der Trageclip (5) im Bereich der Mitte seiner Außenwand mehrere kleine Öffnungen für den Schallaustritt des Lausprechers (7) aufweist.

8. Trageclip für ein tragbares Kommunikationsendgerät, **dadurch gekennzeichnet, daß** in dem als Hohlkörper gestalteten, dem entsprechenden Gehäusebereich des Kommunikationsendgerätes (1) angepaßten Trageclip (5) ein Lautsprecher (7) und eine Antenne (8) eingebaut sind und daß diese Einbauteile (7, 8) mit einer elektrischen Kontaktvorrichtung (11) im Bereich des Gelenkteiles (9) für die Befestigung des Trageclips (5) an dem tragbaren Kommunikationsendgerät (1) verbunden sind.

## Claims

1. Portable communications terminal (1) having a carrying clip (5) which is provided on the housing rear wall, **characterized in that** a loudspeaker (7) and an antenna (8) are integrated in the carrying clip (5).

2. Portable communications terminal according to Claim 1, **characterized in that** the carrying clip (5) is connected via a hinged joint (9) to the housing of the communications terminal (1) such that it can be pivoted or folded in steps.

3. Portable communications terminal according to Claim 2, **characterized in that** the carrying clip (5) can be folded up through about 180° in comparison to the folded-in position in which it rests against the housing.

4. Portable communications terminal according to Claim 2, **characterized in that** the carrying clip (5) can be folded out through somewhat more than 90° in comparison to the folded-in position in which it rests against the housing.

5. Portable communications terminal according to Claim 2, **characterized in that** the hinged joint (9) of the carrying clip (5) has electrical contact apparatuses (11) for connection of a loudspeaker (7) and an antenna (8) to the corresponding electrical circuits in the communications terminal (1).

6. Portable communications terminal according to Claim 5, **characterized in that** the carrying clip (5) is removable.

7. Portable communications terminal according to Claim 1, **characterized in that** the carrying clip (5) has two or more small openings for the sound to emerge from the loudspeaker (7) in the region of the centre of its outer wall.

8. Carrying clip for a portable communications terminal **characterized in that** a loudspeaker (7) and an antenna (8) are installed in the carrying clip (5) which is in the form of a hollow body and is matched to the corresponding housing region of the communications terminal (1), and **in that** these built-in parts (7, 8) are connected to an electrical contact apparatus (11) in the region of the hinged joint part (9) for attachment of the carrying clip (5) to the portable communications terminal (1).

## Revendications

1. Terminal portable de communication (1) comprenant un clip de fixation (5) prévu contre la paroi arrière du boîtier,
**caractérisé en ce que**
dans le clip de fixation (5), un haut-parleur (7) et une antenne (8) sont intégrés.

2. Terminal portable de communication selon la revendication 1,
**caractérisé en ce que**
le clip de fixation (5) est relié au boîtier du terminal portable de communication (1), de façon progressivement orientable, respectivement clipsable, par un joint d'articulation (9).

3. Terminal portable de communication selon la revendication 2,
**caractérisé en ce que**
le clip de fixation (5) est entièrement clipsable d'environ 180° par rapport à la position clipsée reposant contre le boîtier.

4. Terminal portable de communication selon la revendication 2,
**caractérisé en ce que**
le clip de fixation (5) est déclipsable environ d'un peu plus de 90° par rapport à la position clipsée reposant contre le boîtier.

5. Terminal portable de communication selon la revendication 2,
**caractérisé en ce que**
le joint d'articulation (9) du clip de fixation (5) présente des dispositifs de contacts (11) électriques pour relier le haut-parleur (7) et l'antenne (8) aux circuits de commutation électriques correspondants du terminal de communication (1).

6. Terminal portable de communication selon la revendication 5,
**caractérisé en ce que**
le clip de fixation (5) est amovible.

7. Terminal portable de communication selon la revendication 1,
**caractérisé en ce que**
le clip de fixation (5) présente, au niveau du centre de sa paroi externe, plusieurs petites ouvertures pour la sortie du son du haut-parleur (7).

8. Clip de fixation pour un terminal portable de communication,
**caractérisé en ce que**
dans le clip de fixation (5) adapté au niveau du boîtier correspondant du terminal de communication (1), boîtier configuré comme un corps creux, un haut-parleur (7) et une antenne (8) sont intégrés, et ces éléments de construction (7, 8) sont reliés à un dispositif de contact (11) électrique au niveau de l'élément d'articulation (9) pour la fixation du clip de fixation (5) contre le terminal portable de communication (1).
